# EUROPÄISCHE PATENTSCHRIFT

(11) **EP 1 897 209 B1**
(45) Veröffentlichungstag und Bekanntmachung des Hinweises auf die Patenterteilung: **03.08.2011**
(21) Anmeldenummer: 06763819.7
(22) Anmeldetag: 21.06.2006
(51) Int. Cl.: H02K 9/06, H02K 1/27, H02K 21/22

(54) **ROTOR MIT LÜFTERRAD FÜR EINEN ELEKTRONISCH KOMMUTIERTEN ELEKTROMOTOR**
ROTOR COMPRISING A FAN WHEEL FOR AN ELECTRONICALLY COMMUTATED ELECTRIC MOTOR
ROTOR COMPORTANT UNE ROUE DE VENTILATEUR DESTINE A UN MOTEUR ELECTRIQUE A COMMUTATION ELECTRONIQUE

(30) Priorität: 23.06.2005 DE 202005010000 U
(43) Veröffentlichungstag der Anmeldung: 12.03.2008
(73) Patentinhaber: ebm-papst Mulfingen GmbH & Co. KG, 74673 Mulfingen (DE)
(72) Erfinder: STURM, Gerhard, 74673 Mulfingen (DE); REINHARDT, Wilhelm, 74575 Schrozberg-Gütbach (DE); STRENG, Gunter, 74575 Schrozberg (DE); GELBING, Markus, 74599 Wallhausen (DE)
(74) Vertreter: Patentanwälte Dr. Solf & Zapf
(86) Internationale Anmeldenummer: PCT/EP2006/063416
(87) Internationale Veröffentlichungsnummer: WO 2006/136585

(56) Entgegenhaltungen:
- EP-A- 0 828 082
- DE-A1- 4 143 383
- DE-A1- 10 204 037
- DE-A1- 10 247 310
- DE-A1- 10 258 346
- DE-U1-202004 010 088
- US-A1- 2005 071 985
- PATENT ABSTRACTS OF JAPAN Bd. 2003, Nr. 12, 5. Dezember 2003 (2003-12-05) -& JP 2005 086967 A (MATSUSHITA ELECTRIC IND CO LTD), 31. März 2005 (2005-03-31)

## Beschreibung

Die vorliegende Erfindung betrifft einen Rotor mit Lüfterrad, insbesondere als Außenläufer für einen elektronisch kommutierten Elektromotor, mit einem Rotorkörper, der über eine Wellenbuchse mit einer Rotorwelle verbunden ist und an seiner Innenseite Magnetsegmente aufweist, die von einem Rückschlussring umfasst sind, und an seiner Außenseite Lüfterflügel besitzt,

Bei derartigen Außenläufermotoren dreht sich der zylinderförmige Rotorkörper um den innenliegenden feststehenden Stator. Die Stromwendung in den Statorwicklungen erfolgt verschleißfrei auf elektronischem Wege. Der Rotor besteht aus Permanentmagneten, die ein zeitlich konstantes Magnetfeld zwischen ihren Polen erzeugen und einem die Permanentmagnete umschließenden Rückschlussring, der den magnetischen Kreis schließt. In der Anwendung als Ventilatorantrieb sind dem Stand der Technik entsprechend an der Außenseite des Rotorkörpers Lüfterflügel angebracht.

In der Druckschrift DE 20 2004 010 890 U1 ist eine solche Ventilatoranordnung als Minilüfter ausgeführt. Bei Lüftern dieser Miniaturgröße ist der Rotorkörper gemäß der Erfindungsbeschreibung bevorzugt aus Kunststoff hergestellt und besitzt in seiner Mitte eine ausgeformte Nabe, in die die Rotorwelle durch Kunststoffumspritzen unmittelbar befestigt ist. Eine Nabe als ursprünglich separates Teil ist nicht vorgesehen.

Bei Lüftermotoren höherer Leistungsklassen ist der Rotorkörper meist als gezogene Blechglocke ausgeführt, die über eine eingeschweißte gedrehte Rotorbuchse mit der Rotorwelle formschlüssig verbunden ist. Die Lüfterflügel sind dem Stand der Technik gemäß angeschraubt oder über eine sogenannte Blechronde auf den Rotor aufgepresst.

Bei derartigen Ausführungen können im Falle elektrostatischer Aufladung des Rotors stoßartige Entladeströme über die Stromflusskette Rotor - Achse - Lager fließen und dabei die Lager durch erosive Schädigung der Kugeln und Laufflächen zerstören. Die Druckschrift DE 203 06 902 U1 beschreibt, wie durch zusätzliche Isolationselemente Lagerschäden vermieden werden können.

Weiteren stand der Technik ist US 2005 071985 A1 und EPO 828082 A1. Als nachteilig erweisen sich bei dem Stand der Technik weiterhin, dass das Lüfterrad, bestehend aus Rotorkörper und Lüfterflügeln, aus einer Vielzahl von Einzelteilen unterschiedlichsten Materials zusammengesetzt ist, wodurch sich der Fertigungsprozess in viele Schritte zergliedert und somit einen erheblichen Faktor der Herstellkosten bildet. Zudem ist der Anteil an Metallbauteilen hoch, was wiederum die Materialkosten und das Gewicht erhöht.

Der vorliegenden Erfindung liegt die Aufgabe zu Grunde, einen Rotor mit Lüfterrad

hinsichtlich seiner Herstell barkeit zu verbessern und optimierte Lauf-und Gebrauchseigenschaften zu erreichen. Diese Aufgabe wird erfindungsgemäß

durch den in Anspruch 1 definierten Rotor gelöst. Vorteilhafte Ausgestallungs formen der Erfindung sind Gegenstand der abhängigen Ansprüche 2-4. Durch die Umspritzung von metallischem. Rückschlussring mit vormontierten Magnetsegmenten einerseits und Wellenbuchse mit Rotorwelle andererseits entsteht ein einstückiges Lüfterrad in vorteilhaft kompakter Bauweise. Dieses Lüfterrad erfüllt die elektrotechnische Funktion des Rotors und ist zugleich als Lüfterflügelanordnung zur Erfüllung der strömungstechnischen Aufgaben ausgebildet. Dabei beschränkt sich der Materialeinsatz von Metall auf den Rückschlussring und die Rotorwelle mit aufgepresster Wellenbuchse, wobei letztere durch materialoptimierte Fertigungsverfahren, wie das Ziehen, hergestellt werden kann. Eine Gewichtsreduzierung ist die Folge. Eine Oberflächenbehandlung des Rotorkörpers in Form eines Korrosionsschutzes entfällt in Folge der vollständigen Kunststoffumspritzung. Die angestrebte Senkung der Material- und der Fertigungskosten wird erreicht.

Von besonderem Vorteil ist, dass Ladungsabfluss bei elektrostatisch aufgeladenem Rückschlussring durch einen Leitungsstrom über die Rotorwelle und die Wellenlager nicht auftreten kann, da der Rotor durch den Kunststoff isoliert ist. Eine Isolierung der Rotorwelle erübrigt sich somit.

Weitere vorteilhafte Ausgestaltungsmerkmale der Erfindung werden an Hand eines bevorzugten, in den Zeichnungen veranschaulichten Ausführungsbeispiels erläutert. Es zeigen:
- Fig. 1: einen erfindungsgemäßen Rotor mit Lüfterrad,
- Fig. 2: den Rotor, bestehend aus einem Rückschlussring mit Magnetsegmenten,
- Fig. 3: eine Wellenbuchse mit einer Rotorwelle, nicht umspritzt,
- Fig. 4: den erfindungsgemäßen Rotor mit Lüfterrad im Axialschnitt, mit Blick auf die Außenseite,
- Fig. 5: den erfindungsgemäßen Rotor mit Lüfterrad im Axialschnitt, mit Blick in den Innenraum.

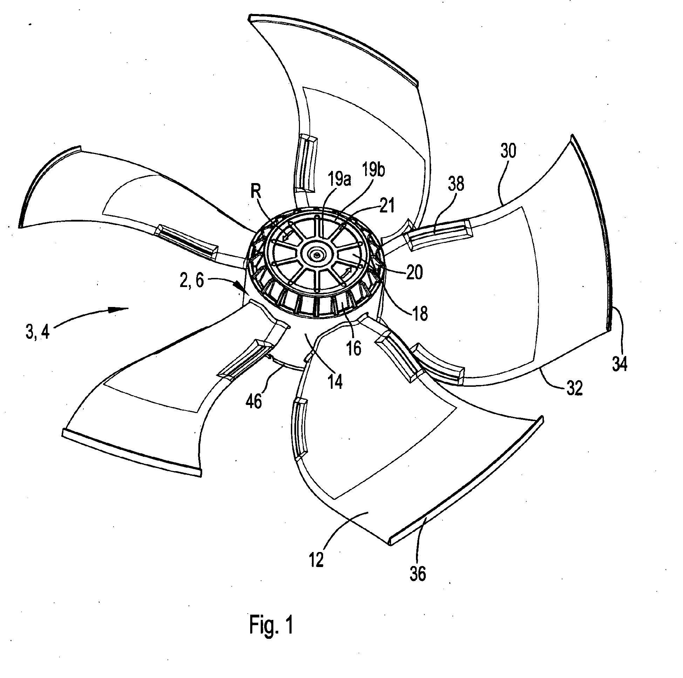

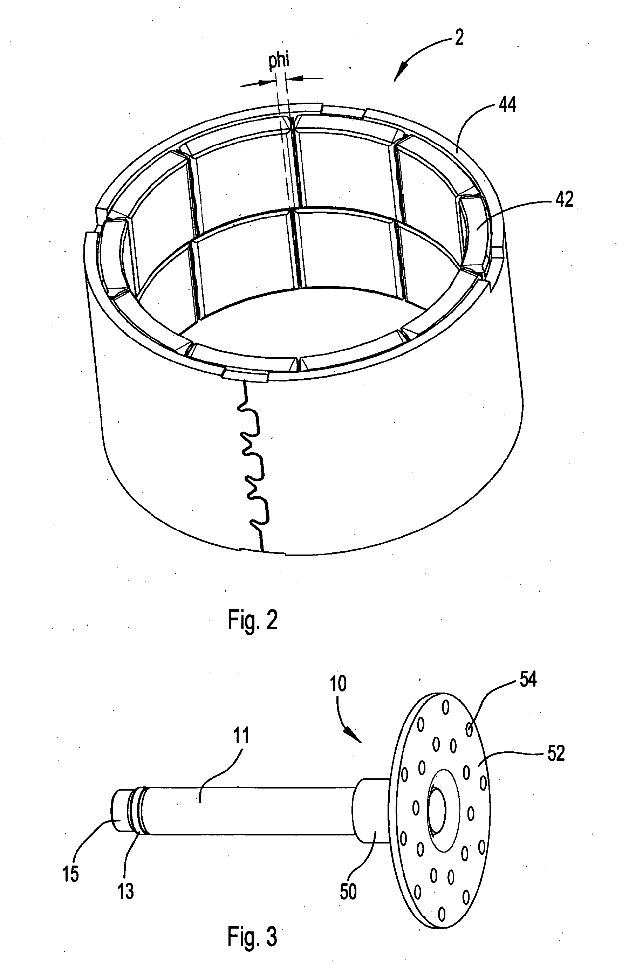

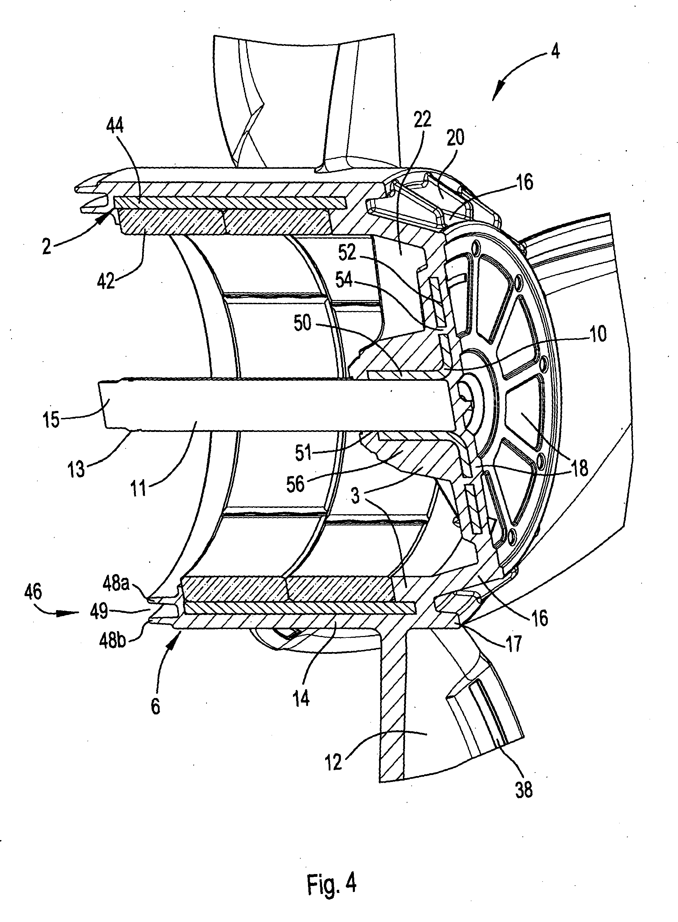

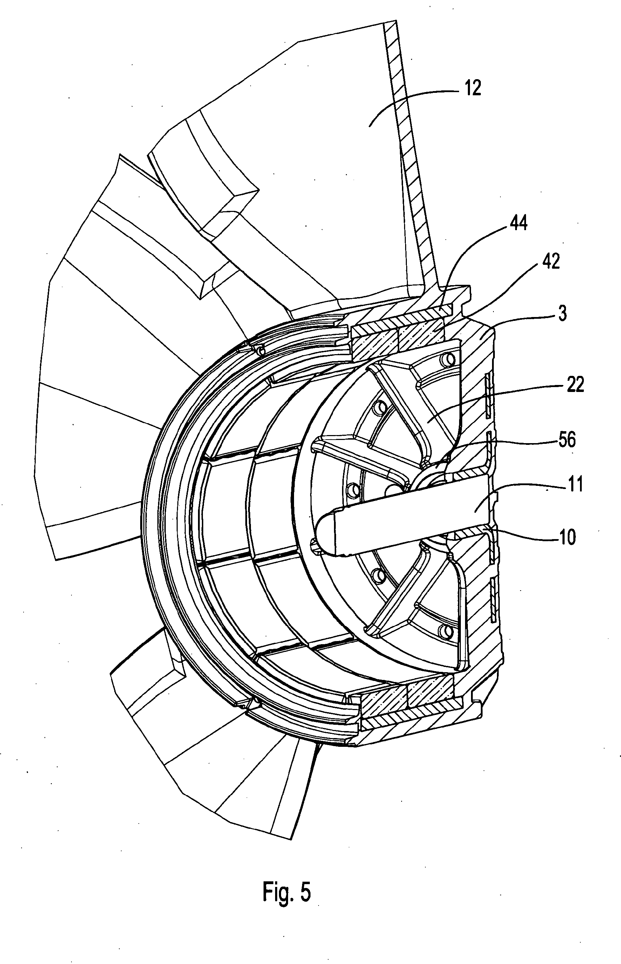

Fig. 1 zeigt eine Gesamtdarstellung eines erfindungsgemäßen Rotors 2 mit Lüfterrad 4. Das einstückig durch eine Kunststoffumspritzung 3 geformte Lüfterrad 4 besteht aus einem im Wesentlichen zylindrischen Rotorkörper 6, der den eigentlichen Rotor 2 (verborgen, siehe Fig. 2) und eine Wellenbuchse 10 (verborgen, siehe Fig. 3) umfasst und angeformten Lüfterflügeln 12. Eine zylindrische Wandung 14 des Rotorkörpers 6 ist buchsenseitig über eine konusförmige Wandung 16 mit einer Deckwandung 18 abgeschlossen. Die konusförmige Wandung 16 weist außenliegende, über den Umfang verteilt angeordnete radial-axial verlaufende Versteifungsrippen 20 auf. An der Außenseite der Deckwandung 18 erstrecken sich zwischen einem inneren Ringsteg 19 a und einem äußeren Ringsteg 19 b radial verlaufende Ringstege 21, die im Innenraum des zylindrischen Rotorkörpers 6 sich als Rippen 22 (verborgen, siehe Fig. 4 und 5) fortsetzen.

An der Außenseite der zylinderförmigen Wandung 14 des Rotorkörpers 6 sind über den Umfang verteilt gleichartige Lüfterflügel 12 geformt. Die Lüfterflügel 12 weisen bei sichelförmigem Verlauf ihrer in Bezug auf die Drehrichtung R vorderen 30 und hinteren 32 Flügelkante weitgehend radial nach außen, beginnend mit einem axialen Versatz zwischen Flügelvorderkante 30 und Flügelhinterkante 32, und schließen mit der radial außenliegenden Kante 34 ab. Die Lüfterflügel 12 sind zwischen Flügelansatz an der zylinderförmigen Wandung 14 des Rotorkörpers 6 und dem Flügelende mit einer Verwindung geformt.

An den Flügelenden sind Strömungselemente 36 ausgeformt. Die Strömungselemente 36 reduzieren die strömungstechnischen Verluste, indem sie die um die außenliegende Kante 34 von der Druck- zur Sogseite fließende Ausgleichsströmung behindern. In der vorliegenden Ausführungsform sind die Strömungselemente 36 als axiale Stege entlang der radial außenliegenden Kante 34 entgegen der Haupt-Strömungsrichtung weisend, zur Saugseite hin verlaufend ausgebildet. Längs der vorderen Flügelkante 30 und der hinteren Flügelkante 32 sind Nuten 38 ausgebildet, die zur Aufnahme von Wuchtelementen dienen.

Fig. 2 zeigt den Rotor 2. Dieser besteht aus einem zylinderförmigen Metallring, dem Rückschlussring 44, dessen Innenseite mit Magnetsegmenten 42 vollständig ausgekleidet ist. Die Magnetsegmente 42 sind wie im Ausführungsbeispiel dargestellt in zwei axial nebeneinanderliegenden Reihen mit jeweils zehn Magnetsegmenten 42 vormontiert und weisen umfänglich zueinander einen geringen Umfangs-Winkelversatz phi auf. Es sind natürlich auch, abhängig von der Motorbaugröße, einreihige aus dem Stand der Technik bekannte Magnetsegmente möglich.

Fig. 3 zeigt die Wellenbuchse 10 mit einer Rotorwelle 11. Die Wellenbuchse 10 weist einen Buchsenschaft 50 auf, in den ein Ende der Rotorwelle 11 eingepresst, eingeschweißt oder auf andere Weise befestigt ist. Der Buchsenschaft 50 setzt sich zu diesem Ende hin in radialer Ebene als kreisförmiger Flansch 52 mit einer Vielzahl von Bohrungen 54 fort. Das freie Ende der Rotorwelle 11 ist mit einer umlaufenden Verdickung 13 versehen, die in einem Absatz 15 geringeren Wellendurchmessers übergeht. Die in den Fig. 2 und 3 dargestellten Anordnungen werden in ein Kunststoffspritzwerkzeug eingelegt und mit der Kunststoffumspritzung 3 umgeben.

Das durch die Kunststoffumspritzung 3 gefertigte Lüfterrad 4 mit Rotorkörper 6 und Lüfterflügeln 12 ist in Fig. 4 im Axialschnitt zu sehen. Man erkennt die zylinderförmige Wandung 14 des Rotorkörpers 6, die sich buchsenseitig als leicht verjüngende, konusförmige Wandung 16 fortsetzt und von der Deckwandung 18 abgeschlossen wird. An dem Übergang der zylinderförmigen Wandung 14 zur konusförmigen Wandung 16 ist außenliegend ein umlaufender Ringkragen 17 ausgebildet, von dem aus sich die Außenkanten der Versteifungsrippen 20 zur Deckwandung 18 hin erstrecken. Zur Formung der Deckwandung 18 umschließt die Kunststoffumspritzung 3 den kreisrunden in radialer Ebene liegenden Flansch 52 der Wellenbuchse 10 und durchdringt dessen Bohrungen 54. Den Buchsenschaft 50 der Wellenbuchse 10 und ein kurzer an den Buchsenschaft 50 angrenzender Abschnitt 51 der Rotorwelle 11 sind durch das Umspritzen von einem Buchsen-Mantel 56 umschlossen, von dem sich innenliegende Versteifungsrippen 22 in radialer Richtung zu der Innenseite der konusförmigen Wandung 16 des Rotorkörpers 6 erstrecken. Die zylinderförmige Wandung 14 weist an ihrem freien Ende eine der Deckwandung 18 gegenüberliegende Berandung 46 auf, die als Teil einer Labyrithdichtung zum Schutz gegen Feuchtigkeit ausgebildet ist. Die Berandung 46 besteht in Art einer Doppelwandung aus zwei konzentrischen Wandungsabschnitten 48 a, b, zwischen denen eine umlaufende Nut 49 ausgebildet ist.

Fig. 5 zeigt den Innenraum des Rotorkörpers 6 im Axialschnitt. Zu erkennen sind die innenliegenden Rippen 22, die von dem Buchsenmantel 56 in radialer Richtung nach außen zu der Innenseite der konusförmigen Wandung 16 des Rotorkörpers 6 verlaufen. Die Rippen 22 wirken als Kühlflügel.

## Patentansprüche

1. Rotor (2) mit Lüfterrad(4), insbesondere als Außenläufer für einen elektronisch kommutierten Elektromotor, mit einem Rotorkörper (6), der über eine Wellenbuchse (10) mit einer Rotorwelle (11) verbunden ist und an seiner Innenseite Magnetsegmente (42) aufweist, die von einem Rückschlussring (44) umfasst sind, wobei die Magnetsegmente (42) an dem Rückschlussring (44) vormontiert sind und zusammen mit der Wellenbuche (10) von einer einstückigen Kunststoffumspritzung (3) umgeben sind, die gleichzeitig den Rotorkörper (6) mit dem Lüfterrad (4) ausbildet,
**dadurch gekennzeichnet, dass** das Lüfterrad (4) als Axiallüfter an der Außenseite des Rotorkörpers (6) gebildete Lüfterflügel (12) mit in Bezug auf die Drehrichtung (R) vorderen Flügelkanten (30) und hinteren Flügelkanten (32) sowie mit radial außenliegenden Kanten (34) aufweist, wobei die Lüfterflügel (12) an ihren vorderen (30) und hinteren (32) Flügelkanten Nuten (38) zur verschiebbaren Aufnahme von Auswuchtelementen sowie an ihren radial außenliegenden Kanten (34) ausgeformte stegförmige Strömungsetemente (36) zur Minderung der Verlustströmung aufweisen, und wobei der zylinderförmige Rotorkörper (6) eine einer Deckwandung (18) gegenübeniegende Berandung (46) aufweist, die zwei durch eine Nut (49) beabstandete Stege (48a, b) als Teil einer Labyrinthdichtung zum Schutz gegen Feuchtigkeit aufweist.

2. Rotor nach Anspruch 1,
**dadurch gekennzeichnet, dass** die Wellenbuchse (10) an einem Ende der Rotorwelle (10) auf dieser befestigt ist.

3. Rotor nach Anspruch 1 oder 2,
**dadurch gekennzeichnet, dass** das der zylinderförmige Rotorkörper (6) im Innenraum ausgeformte radial-axial verlaufende Rippen (22) mit Kühlfunktion aufweist.

4. Rotor nach einem der Ansprüche 1 bis 3,
**dadurch gekennzeichnet, dass** die Wellenbuchse (10) aus einem Buchsenschaft (50) und einem zu diesem in radialer Ebene ausgebildeten kreisförmigen Flansch (52) besieht, der mit einer Vielzahl von Bohrungen (54) versehen list.

## Claims

1. A rotor (2) with a fan impeller (4), in particular as an external rotor for an electronically-commutated electric motor, with a rotor body (6) which is connected to a rotor shaft (11) via a shaft bush (10) and has on its inside magnet segments (42) which are surrounded by a return-path ring (44), the magnet segments (42) being premounted on the return-path ring (44) and together with the shaft bush (10) being surrounded by a one-piece plastics encapsulation (3) which at the same time forms the rotor body (6) with the fan impeller (4),
**characterised in that** the fan impeller (4) as an axial fan has fan blades (12), formed on the outside of the rotor body (6), with blade edges (30) which are at the front and blade edges (32) which are at the rear in relation to the direction of rotation (R) and also with radially outer edges (34), the fan blades (12) having on their front (30) and rear (32) blade edges grooves (38) for displaceably receiving balancing elements, and also bar-shaped flow elements (36), formed on their radially outer edges (34), for reducing the lost flow, and the cylinder-shaped rotor body (6) having a boundary (46) located opposite a covering wall (18), which boundary has two bars (48a, b), spaced apart by a groove (49) as part of a labyrinth seal for protecting against moisture.

2. A rotor according to Claim 1,
**characterised in that** the shaft bush (10) is fastened to the rotor shaft (10) at one end thereof.

3. A rotor according to Claim 1 or 2,
**characterised in that** the cylindrical rotor body (6) has radially/axially extending ribs (22) with a cooling function which are formed in the interior.

4. A rotor according to one of Claims 1 to 3,
**characterised in that** the shaft bush (10) consists of a bush shank (50) and a circular flange (52) formed in a radial plane thereto, which flange is provided with a plurality of bores (54).

## Revendications

1. Rotor (2) avec roue de ventilateur (4), en particulier sous forme de rotor extérieur pour un moteur électrique à commutation électronique, comprenant un corps de rotor (6) relié à un arbre de rotor (11) par un coussinet (10) et présentant sur sa face intérieure des segments magnétiques (42) entourés d'une bague de retour de flux magnétique (44), dans lequel les segments magnétiques (42) sont prémontés sur la bague de retour de flux magnétique (44) et sont avec le coussinet (10) entourés d'un enrobage plastique intégral (3) qui réalise en même temps le corps de rotor (6) avec la roue de ventilateur (4),
**caractérisé en ce que** la roue de ventilateur (4) présente comme ventilateur axial des ailettes de ventilateur (12) formées sur la face extérieure du corps de rotor (6) avec des bords d'ailette avant (30) et des bords d'ailettes arrière (32) par rapport au sens de rotation (R), ainsi qu'avec des bords (34) situés radialement à l'extérieur, dans lequel les ailettes de ventilateur (12) présentent sur leurs bords d'ailettes avant (30) et arrière (32) des rainures (38) pour recevoir de façon mobile des éléments d'équilibrage ainsi que des éléments d'écoulement (36) en forme d'entretoise, conformés au niveau de leurs bords (34) situés radialement à l'extérieur, pour réduire le courant de perte, et dans lequel le corps de rotor cylindrique (6) présente une bordure (46) opposée à une paroi de recouvrement (18) et présentant deux entretoises (48a, b) espacées par une rainure (49) faisant partie d'une garniture en labyrinthe pour la protection contre l'humidité.

2. Rotor selon la revendication 1,
**caractérisé en ce que** le coussinet (10) est fixé sur l'arbre de rotor (10) à une extrémité de celui-ci.

3. Rotor selon la revendication 1 ou 2,
**caractérisé en ce que** le corps de rotor cylindrique (6) présente des nervures (22) conformées dans l'espace intérieur, s'étendant de façon radiale et axiale et ayant une fonction de refroidissement.

4. Rotor selon l'une quelconque des revendications 1 à 3,
**caractérisé en ce que** le coussinet (10) se compose d'une tige de coussinet (50) et d'une bride (52) circulaire réalisée dans un plan radial par rapport à celle-ci, ladite bride étant munie d'une pluralité de perçages (54).
